# EUROPEAN PATENT APPLICATION

(11) **EP 2 071 804 A1**
(43) Date of publication of application: **17.06.2009**
(21) Application number: 07301668.5
(22) Date of filing: 13.12.2007
(51) Int. Cl.: H04L 29/06, H04L 12/18

(54) **A method for security handling in a wireless access system supporting multicast broadcast services**

(71) Applicant: Alcatel Lucent, 75008 Paris (FR)
(72) Inventor: Germaneau, Alexis, 92000, NANTERRE (FR); Balageas, Carine, 91190, GIF SUR YVETTE (FR); Conte, Alberto, 94230, CACHAN (FR)
(74) Representative: El Manouni, Josiane

(57) **Abstract**

One object of the present invention is α method for security handling in a wireless access system supporting Multicast Broadcast Services MBS, said method comprising the steps of:
- upon request by a Mobile Station MS for distribution of MBS keying data for an MBS Service Flow, checking in the Access Service Network ASN of said system if access to said MBS Service is authorized for said MS, and, if access to said MBS Service is authorized for said MS, authorizing said distribution of MBS keying data to said MS.

## Description

The present invention generally relates to wireless or mobile communication networks and systems.

Detailed descriptions of such networks and systems can be found in the litterature, in particular in Technical Specifications published by standardisation bodies.

An example of such networks and systems, to which the present invention particularly (but not exclusively) applies, uses WiMAX technology. A description of WiMAX technology can be found in particular in IEEE 802.16e and WiMAX Forum standard specifications.

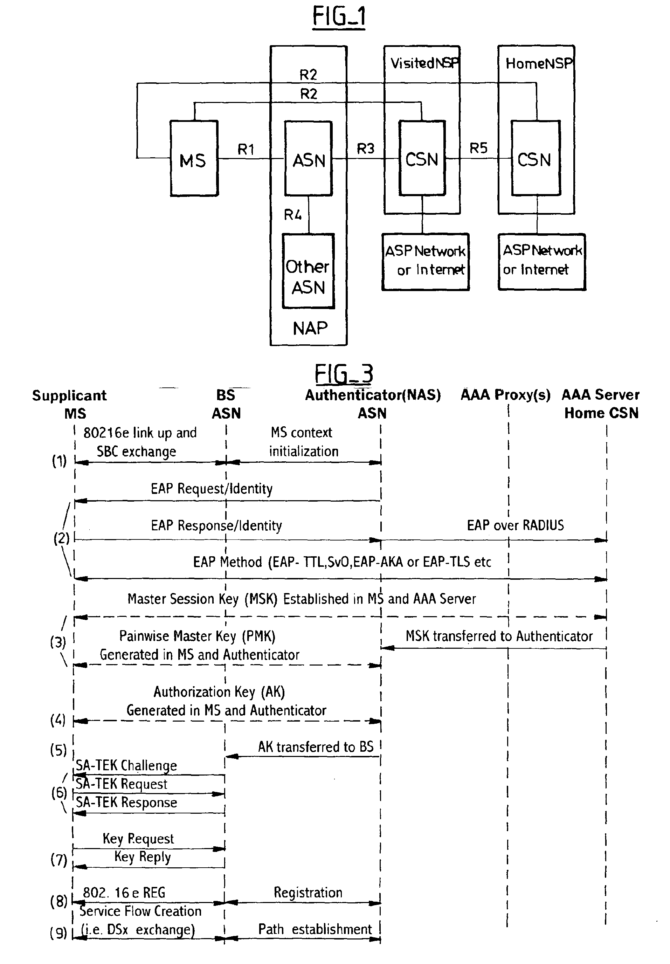

The WiMAX network reference model is recalled in figure 1 taken from Technical Specification "WiMAX End-to-End Network Systems Architecture" Stage 2 published by WiMAX Forum. A Mobile Station MS (also called Subscriber Station SS, sometimes noted MSS) has access to a Connectivity Service Network CSN via an Access Service Network ASN. ASN is defined as a set of network functions needed to provide radio access to a WiMAX subscriber. ASN comprises entities such as in particular Base Stations (BS) and ASN Gateways (ASN GW). CSN is defined as a set of network functions enabling IP connectivity and WiMAX services to WiMAX subscribers. CSN comprises entities such as in particular routers and AAA (Authentication Authorization Accounting) Server.

For the support of Multicast Broadcast Services (MBS), the WiMAX network further comprises an entity called MBS Server, having control and distribution functions for MBS services.

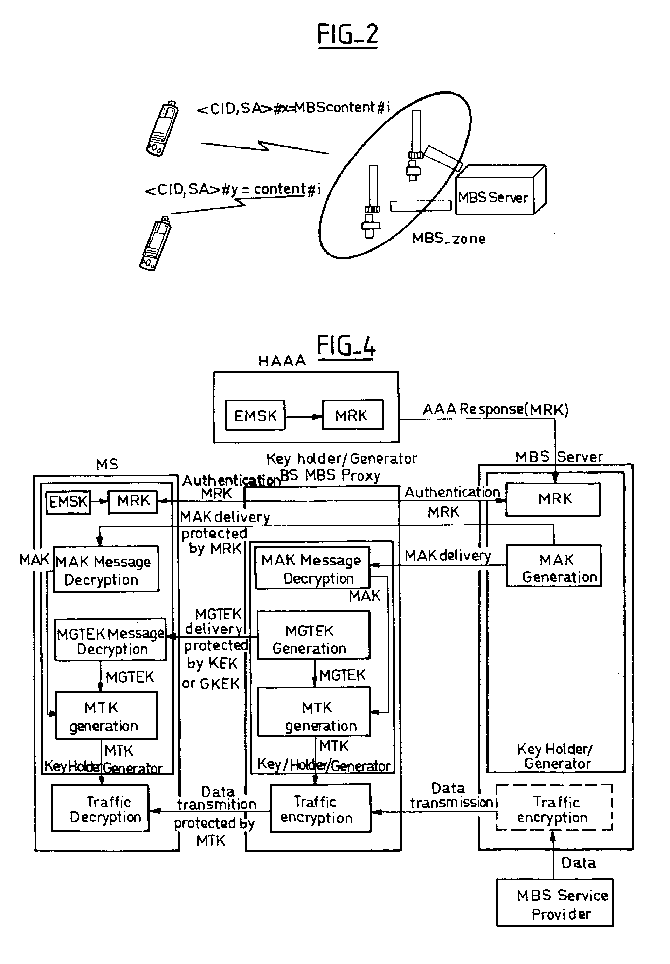

In Multi-BS access mode, as recalled in figure 2, a specific MBS service flow is transmitted over several BSs by using the same CID (Connection Identifier) and same SA (Security Association). The set of such BSs form a MBS Zone (identified by a unique MBS_Zone_id broadcast by each BS). There are multiple benefits of Multi-BS /MBS Zone. When inside an MBS Zone, MSs are not required to be registered to any BS (only initial network entry is needed to get CID, SA). An MS can stay in idle mode while listening DL traffic to receive MBS content, it permits power saving. The basic scenario for MBS services is to continuously broadcast contents over the MBS Zone, even if no user is listening to the traffic.

The MBS Server is the network element that manages one MBS Zone (has the list of BSs belonging to the MBS Zone). All data traffic dedicated to this MBS Zone goes through this network element. There is one MBS Server per MBS Zone (over possibly several ASNs). The MBS Server functionalities may be located in the ASN-GW or at another place in the network.

The present invention more particularly relates to security handling in such networks and systems.

For example, for WiMAX technology, it is recalled that the MAC layer protocol includes a security sublayer providing authentication, secure key exchange, encryption and integrity control. Privacy Key Management (PKM) protocol, also known as PKMv2, is included in the security sublayer in order to provide secure key distribution from BS to SS. PKMv2 procedures include procedures by which the BS and the SS mutually authenticate themselves, and then the BS provides the authenticated SS with keying material.

PKMv2 procedures performed upon network entry by a MS are recalled in figure 3 taken from Technical Specification "WiMAX End-to-End Network Systems Architecture" Stage 2 published by WiMAX Forum. The EAP based authentication process performed between SS and AAA Server in the Home CSN yields the MSK (Master Session Key). The MSK is known to the AAA Server, to the Authenticator in the ASN (transferred from the AAA Server), and to the SS. The SS and the Authenticator in the ASN derive the PMK (Pairwise Master Key) from the MSK. The BS and the SS derive the AK (Authentication Key) from the PMK. The KEK (Key Encrytion Key) is derived from the AK. The TEK (Traffic Encryption Key) is generated as a random number in the BS, keyed with the KEK, and transferred between BS and SS in the TEK exchange. PKMv2 messages exchanged during TEK exchange include PKMv2 Key Request message sent by the SS to the BS, and PKMv2 Key Reply message sent by the BS to the SS. A MAC PDU payload for a created service flow is encrypted using the active TEK.

The present invention more particularly relates to security handling in such networks and systems supporting such MBS Services.

For example, for WiMAX technology, following keying data are defined for MBS services, according to IEEE 802.16e:
- MAK (Authentication Key): serves the same function as AK, for MBS Services; according to current state of the standard, it is supplied by means that are outside the sope of IEEE 802.16e specification,
- MGTEK (MBS Group Traffic Encryption Key): random number provisioned by the access network such as a BS as an access network authorization key; it is updated more frequently than the MAK,
- MTK (MBS Traffic Key): used to protect MBS traffic, derived from the MAK and MGTEK.

Following key derivation functions are defined according to current state of IEEE 802.16e: MAK = RAND(160) MGTEK = (RAND 128) MTK = Dot16KDF(MAK , MGTEK | "MTK", 128) The current assumption of the WiMAX Forum and the IEEE is the MAK should be stored in the MS and is common for all MS that are granted for a service (e.g for a TV channel set). However, as recalled above, IEEE 802.16e specification does not define any way to distribute the MAK.

A proposal for MAK distribution is disclosed in the following document:
WiMAX Forum Network Working Group (NWG) Contribution MBS High-Level System Architecture Description (Number and file name: 070115_NWG_Huawei_MBS_Section_r2.doc).

This document proposes a WEB based distribution framework where the MS retrieve MAK by making a WEB access. As illustrated in figure 4 taken from this document:
- The MBS Server is responsible for authenticating and authorizing a subscribed user for a designated service with HTTP digest authentication mechanism, and for generating and distributing MAK.
- The access network is responsible for generating MGTEK which is used to derive MTK with MAK. - The MS is responsible for establishing MAK with MBS Server using HTTP protocol. The MS is also responsible for requesting MGTEK from ASN (BS or ASN GW) using PKMv2 protocol.

As recognized by the present invention, such distribution framework where the MS retrieves MAK by making a WEB access has a number of drawbacks, in particular:
- this is not satisfactory in terms of user experience as a specific WEB access should to performed to retrieve such key,
- if such WEB access should be automated, the applications should have specific interface with MiMAX device, which is not necessary,
- the mechanism to authenticate granted users is no more based on AAA authentication.

The present invention in particular enables to solve part or all of such problems, or to avoid part or all of such drawbacks. More generally, the present invention enables to improve security handling in such systems.

These and other objects are achieved, in one aspect of the present invention, by a method for security handling in a wireless access system supporting Multicast Broadcast Services MBS, said method comprising the steps of:
- upon request by a Mobile Station MS for distribution of MBS keying data for an MBS Service Flow, checking in the Access Service Network ASN of said system if access to said MBS Service is authorized for said MS, and, if access to said MBS Service is authorized for said MS, authorizing said distribution of MBS keying data to said MS.

These and other objects are achieved, in another aspect of the present invention, by a method for security handling in a wireless access system supporting Multicast Broadcast Services MBS, said method comprising the steps of:
- generating MBS keying data in an MBS Server,
- distributing to the Access Service Network ASN of said system said MBS keying data generated in said MBS Server.

These and other objects are achieved, in other aspects of the present invention, by different entities of a wireless access system (such as in particular ASN entity such as Base Station BS or Access Service Network Gateway ASN GW, CSN entity such as MBS Server, Mobile Station MS) for performing a method according to the present invention.

These and other objects of the present invention will become more apparent from the following description taken in conjunction with the accompanying drawings:
- figure 1 is intended to recall the WiMAX network reference model,
- figure 2 is intended to recall an architecture of a WiMAX network supporting Multicast Broadacst Services,
- figure 3 is intended to recall PKMv2 procedures performed upon network entry by a Mobile Station in a WiMAX network,
- figure 4 is intended to recall a prior art solution for MBS security procedures,
- figures 5 and 6 are intended to illustrate an example of a MBS security procedures according to the present invention.

By way of example, in the following the present invention will more particularly be described in relation with its application to WiMAX technology.

In this example, the present invention may also be explained as follows.

The present invention proposes a flexible framework for subscription to a WiMAX MBS service flow not based on a dedicated MAK proprietary distribution framework, instead of using both MAK (MBS Authorization Key) and MGTEK (Multicast Group Traffic Encryption Key) to cipher MBS channel traffic.

The present invention proposes to avoid use of MAK distribution framework which is out of the scope of WiMAX area.

The present invention proposes to avoid completely usage of MAK and to set statically and permanently MAK in the MS. For example the MAK could be set to 0 in factory ; this key is never updated and stay to 0.

The present invention proposes that the MGTEK is then used for both traffic encryption and user content subscription management.

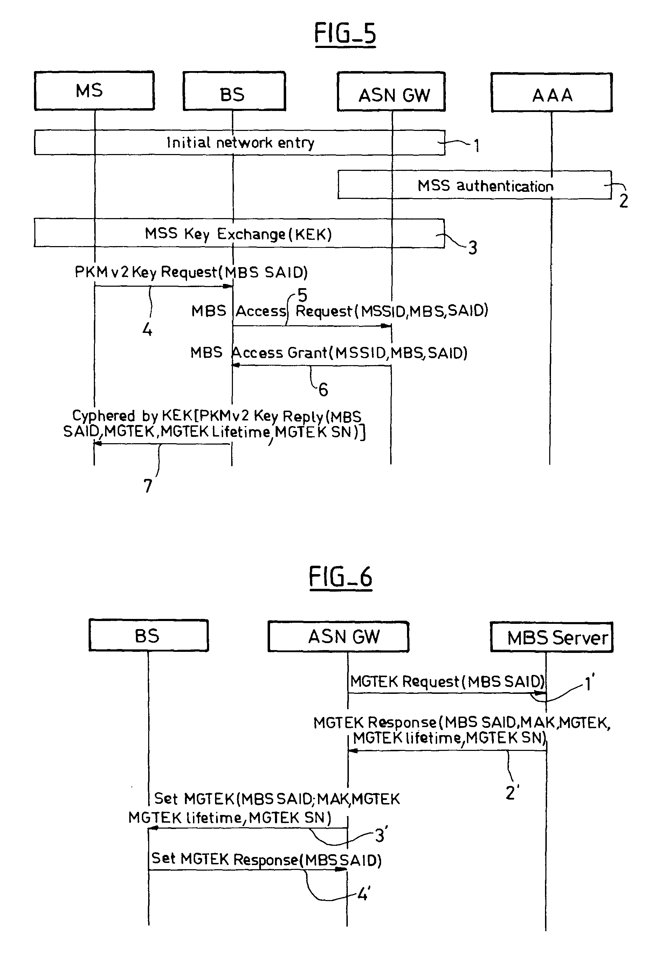

An example of security procedures according to the present invention is illustrated in figures 5 and 6.

In this example, some ASN functionalities are implemented in a BS, while other ASN functionalities are implemented in a ASN GW. However, it should be undersood that other examples are possible. In particular, depending on choice for ASN implementation (i.e. Profile A, or Profile B, or Profile C) some ASN functionalities can be implemented either in a BS or in a ASN GW. In general, to cover such different possibilities, the generic term ASN entity will also be used in the present application.

In the example illustrated in figure 5, the following scenario is used for MS to retrieve the MGTEK.

In step 1, the MS performs initial network entry, as defined in IEEE 802.1be.

In step 2, the ASN GW acting as RADIUS authenticator authenticates the MS, according to the procedures recalled in figure 2. In addition, according to one aspect of the present invention, the list of MBS service flows authorized for the MS is discovered; for example this list is downloaded from the AAA server to the ASN GW during the authentication and authorization procedure performed at network entry.

In step 3, the keys (KEK) for dedicated connections (i.e. for connections others than the one established for MBS service flow) are exchanged, according to the procedures recalled in figure 2.

In step 4, the MS requests the MGTEK for an MBS service flow, by sending a PKMv2 Key Request message to the BS. Parameters sent in this message include MBS SAID (MBS Security Association Identifier).

In step 5, in another aspect of the present invention, the BS relays this Key Request message to the ASN GW, by sending a message called MBS Access Request to the ASN GW. In the illustrated example, parameters sent in this message include MSSID (Mobile Station identifier), MBS SAID.

In step 6, in another aspect of the present invention, the ASN GW checks if the MBS Service flow is authorized for the MS, thanks to the subscription data discovered in step 2, and if the MBS service flow is authorized for the MS, then the ASN GW replies to the BS by sending a message called MBS Access Grant. In the illustrated example, parameters sent in this message include MSSID, MBS SAID.

In step 7, the BS sends MGTEK parameters to the MS in a Key Reply message. In the illustrated example, parameters sent in this message include MBS SAID, MGTEK, MGTEK Lifetime, MGTEK SN (MGTEK Sequence Number).Those parameters are ciphered by the KEK which is dedicated to the MS. So other MSs cannot discover the MGTEK associated to the MBS channel during this stage.

Steps 4, 5, 6 and 7 are repeated each time the MGTEK has expired.

If the MS does not have the right to listen the requested MBS Channel then the ANS GW does not reply, and steps 6 and 7 are by-passed. In such condition the MS is not able to listen MBS because it does not have appropriate keying material to do it.

The MGTEK is periodically updated based on a PKMv2 Key request procedure triggered by the MS (this procedure is described in security section of IEEE 802.16e). The Key request procedure is protected by KEK (Key Encryption Key).

In such conditions, when the ASN gateway receives a PKMv2 request for an MBS service, the MSS is authenticated and the ASN GW knows MBS access restrictions associated to this MS. MGTEK is then distributed to this MS function of these restrictions.

In another aspect of the present invention, the MTK is derived from MAK and MGTEK, by using for example the following key derivation functions replacing the above recalled key derivation functions defined according to current state of IEEE 802.16e: MAK = Constant and never updated (e.g.: set to 0 in factory in the MSS) MGTEK = (RAND 128) MTK = Dot16KDF(MAK, MGTEK | "MTK", 128).

Thus, in one aspect, the present invention proposes a method for security handling in a wireless access system supporting Multicast Broadcast Services MBS, said method comprising the steps of:
- upon request by a Mobile Station MS for distribution of MBS keying data for an MBS Service Flow, checking in the Access Service Network ASN of said system if access to said MBS Service is authorized for said MS, and, if access to said MBS Service is authorized for said MS, authorizing said distribution of MBS keying data to said MS.

In an embodiment, said MBS keying data include an MBS Group Traffic Encryption Key MGTEK. In an embodiment, said method comprises a step of:
- deriving an MBS Traffic Encryption Key MTEK from said MGTEK. In an embodiment, said method comprises a step of:

- deriving an MBS Traffic Encryption Key MTEK from said MGTEK and from a permanent value of a MBS Authorization Key MAK. In an embodiment, said method comprises the steps of:

- upon reception from a Mobile Station MS of a request (Key Request) for distribution of MBS keying data for an MBS Service Flow, an ASN entity corresponding to a Base Station BS sending to an ASN entity corresponding to an Access Service Network Gateway ASN GW a request (MBS Access Request) for checking if access to said MBS Service is authorized for said MS,
- upon reception of said request (MBS Access Request), ASN GW checking if access to said MBS Service is authorized for said MS, and returning a reply (MBS Access Grant) to the BS authorizing said BS to distribute said MBS keying data to said MS if access to said MBS Service is authorized for said MS,
- upon reception of said reply (MBS Access Grant), BS distributing MBS keying data to said MS.

In an embodiment, said steps are repeated upon expiration of a key lifetime. In an embodiment, said method comprises the steps of:
- an AAA Server providing MBS subscription data to an ASN entity upon initial network entry by a MS,
- said ASN entity using said MBS subscription data for checking if access to an MBS Service is authorized for the MS.

In the example illustrated in figure 6, the MGTEK of an MBS service is generated in the MBS server and distributed to ASN GW according to the following scenario.

In step 1', in another aspect of the present invention, the ASN GW sends a MGTEK Request to the MBS Server. In the illustrated example, this message contains a unique identifier of the multicast channel to be ciphered (formerly it should be an identifier of a security association related to the MBS service : MBS SAID).

In step 2', in another aspect of the present invention, the MBS Server replies with a MGTEK Response including, in the illustrated example, the value of the MGTEK, the MGTEK lifetime, and the serial number of the MGTEK MGTEK SN. As is the case in the illustrated example, the MBS Server may also include a value of MAK, which could be seen as a way to retrieve factory value of the MAK set in all MSs in case it is not 0.

In step 3', the ASN GW gives these information to the BSs which broadcast the MBS channel. In the illustrated example, these information are sent in a message Set MGTEK including the same parameters as the MGTEK Response.

In step 4', the BS acknowledges reception of the message sent in step 3' by the ASN GW, by sending to the ASN GW a message Set MGTEK Response including, in the illustrated example, MBS SAID.

In the example described in figure 6, it is assumed that the BS is responsible of the derivation of the MTK which is effectively used for the radio ciphering.

In the example described in figure 6, as the MBS server distributes keys to the ASN GW, a security layer with mutual authentication should be deployed. For example, IPSec of SSL or any other method could be used here.

The scenario according to the example of figure 6 can be triggered for example at initialization, or at any time depending on needs (such as for example at a first request received for accessing a given MBS Service.

The scenario according to the example of figure 6 is repeated periodically by the ASN GW when the MGTEK remaining lifetime is close to 0 in order to refresh MBS keying material. Periodicity of this repetition is set by the MGTEK Lifetime in the MBS. As the MGTEK is used to manage user subscription, a maximum value of MGTEK lifetime between 1 hour and 24 hours for example could be appropriate.

Thus, in another aspect, the present invention proposes a method for security handling in a wireless access system supporting Multicast Broadcast Services MBS, said method comprising the steps of:
- generating MBS keying data in an MBS Server,
- distributing to the Access Service Network ASN of said system said MBS keying data generated in said MBS Server.

In an embodiment, said MBS keying data include an MBS Group Traffic Encryption Key MGTEK.

In an embodiment, said generated MBS keying data include said permanent value of a MBS Authorization Key MAK. In an embodiment, said method comprises the steps of:
- an ASN entity corresponding to an Access Service Network Gateway ASN GW sending to an MBS Server a request (MGTEK Request) for MBS keying data for an MBS Service Flow,
- upon reception of said request (MGTEK Request) from ASN GW, MBS Server returning to ASN GW a reply (MGTEK Response) including MBS keying data for said MBS Service Flow,
- upon reception of said reply (MGTEK Response), ASN GW providing said MBS keying data to at least one ASN entity corresponding to a BS involved in multicast or broadcast of said MBS Service Flow. In an embodiment, said steps are repeated upon expiration of a key lifetime.

The present invention in particular has the following advantges:
- gives a flexible framework for subscription to a WiMAX MBS Service Flow not based on a dedicated MAK proprietary distribution framework,
- makes use of already existing WiMAX infrastructure (AAA, MBS Server)
- is completely transparent to the user,
- is natural to the network access provider (grants are "naturally" managed by AAA),
- still permits to manage per users grant and billing.

Additionally there is no specific requirement in the MS as the solution is purely based on IEEE 802.16e radio mechanisms.

In addition to the above described methods, other aspects of the present invention correspond to different entites of a wireless access system (such as in particular Access Service Network ASN entity such as Base Station BS or Access Service Network Gateway ASN GW, Connectivity Service Network CSN entity such as MBS Server) for performing a method according to the present invention.

Thus, another aspect of the present invention is an Access Service Network ASN entity for a wireless access system supporting Multicast Broadcast Services MBS, said ASN entity comprising:
- means for, upon request by a Mobile Station MS for distribution of MBS keying data for an MBS Service Flow, checking if access to said MBS Service is authorized for said MS, and, if access to said MBS Service is authorized for said MS, authorizing said distribution of MBS keying data to said MS. In an embodiment, said Access Service Network ASN entity comprises:

- means for getting from an AAA Server MBS subscription data upon initial network entry by a MS,
- means for using said MBS subscription data for checking if access to an MBS Service is authorized for the MS.

Another aspect of the present invention is an Access Service Network ASN entity for a wireless access system supporting Multicast Broadcast Services MBS, said ASN entity comprising:
- means for distributing MBS keying data for an MBS Service Flow to a MS requesting said distribution of MBS keying data, if said distribution is authorized for said MS. In an embodiment, said Access Service Network ASN entity comprises:

- means for receiving said MBS keying data to be distributed to said MS, distributed by another ASN entity.

Another aspect of the present invention is an Access Service Network ASN entity for a wireless access system supporting Multicast Broadcast Services MBS, said ASN entity comprising:
- means for requesting distribution of MBS keying data for an MBS Service Flow, from an MBS Server. In an embodiment, said Access Service Network ASN entity comprises:

- means for distributing to another ASN entity said MBS keying data distributed by said MBS Server to said ASN entity.

For these aspects of the present invention regarding an Access Service Network ASN entity:
In an embodiment, said MBS keying data include an MBS Group Traffic Encryption Key MGTEK.
In another embodiment, said ASN entity comprises:
   - means for deriving an MBS Traffic Encryption Key MGTEK from said MGTEK.
In another embodiment, said ASN entity comprises:
   - means for deriving an MBS Traffic Encryption Key MGTEK from said MGTEK and from a permanent value of a MBS Authorization Key MAK.
Another aspect of the present invention is a MBS Server for a wireless access system supporting Multicast Broadcast Services MBS, comprising:
   - means for generating MBS keying data to be distributed to Mobile Stations MS for an MBS Service Flow,
   - means for distributing said generated MBS keying data to the Access service Network ASN of said system.
In an embodiment, said generated MBS keying data include an MBS Group Traffic Encryption Key MGTEK.
In an embodiment, said generated MBS keying data include a permanent value of a MBS Authorization Key MAK.
Another aspect of the present invention is a Base Station BS, comprising:
   - means for, upon reception from a Mobile Station MS of a request (Key Request) for distribution of MBS keying data for an MBS Service Flow, sending to an Access Service Network Gateway ASN GW a request (MBS Access Request) for checking if access to said MBS Service is authorized for said MS,
   - means for, upon reception of a reply (MBS Access Grant) returned by ASN GW if access to said MBS Service is authorized for said MS, distributing said MBS keying data to said MS.
In an embodiment, said steps are repeated upon expiration of a key lifetime.
In an embodiment, said Base Station comprises:
   - means for receiving MBS keying data to be distributed by said Base Station, distributed by an ASN entity corresponding to an ASN GW.
In an embodiment, said MBS keying data include an MBS Group Traffic Encryption Key MGTEK.
In an embodiment, said Base Station comprises:
   - means for deriving a MBS Traffic Encryption Key MTEK from said distributed MGTEK and from a permanent value of a MAK.
In an embodiment, said MBS keying data include said permanent value of a MBS Authorization Key MAK.
Another aspect of the present invention is an Access Service Network Gateway ASN GW, comprising:
   - means for, upon reception from a BS of a request (MBS Access Request) for checking if access to said MBS Service is authorized for said MS, ASN GW checking if access to said MBS Service is authorized for said MS, and returing a reply (MBS Access Grant) to the BS authorizing said BS to distribute said MBS keying data to said MS if access to said MBS Service is authorized for said MS.
Another aspect of the present invention is an ASN GW comprising:
   - means for distributing MBS keying data to at least one ASN entity corresponding to a BS involved in multicast or broadcast of said MBS Service Flow.
Another aspect of the present invention is an ASN GW comprising:
   - means for receiving from an AAA Server subscription data provided by said AAA Server to said ASN GW upon initial network entry by a MS,
   - means for using said MBS subscription data for checking if access to an MBS Service is authorized for said MS.
In an embodiment, said MBS keying data include an MBS Group Traffic Encryption Key MGTEK.
In an embodiment, said MBS keying data include a permanent value of a MBS Authorization Key MAK.
Another aspect of the present invention is an Access Service Network Gateway ASN GW, comprising:
   - means for sending to an MBS Server a request (MGTEK Request) for MBS keying data for an MBS Service Flow, means for, upon reception of a reply (MGTEK Response) from said MBS Server including MBS keying data, distributing MBS keying data to at least one BS involved in multicast or broadcast of said MBS Service Flow.
Another aspect of the present invention is a MBS Server, comprising:
   - means for generating MBS keying data to be distributed to Mobile Stations MS for an MBS Service Flow,
   - means for distributing said generated MBS keying data to the ASN of said system.
In an embodiment, said generated MBS keying data include an MBS Group Traffic Encryption Key MGTEK.
In an embodiment, said generated MBS keying data include a permanent value of a MBS Authorization Key MAK.
Another aspect of the present invention is a Mobile Station for a wireless access system supporting Multicast Broadcast Services MBS, comprising:
   - means for storing a permanent value of a MBS Authorization Key MAK.
In an embodiment, said Mobile Station comprises:
   - means for deriving a MBS Traffic Encryption Key MTEK from a value of a MBS Group Traffic Encryption Key MGTEK distributed to said MS by the ASN of said system, and from said permanent value of MAK.
The detailed implementation of the above-mentioned means does not raise any special problem for a person skilled in the art, and therefore such means do not need to be more fully disclosed than has been made above, by their function, for a person skilled in the art.

## Claims

1. A method for security handling in a wireless access system supporting Multicast Broadcast Services MBS, said method comprising the steps of:
- upon request by a Mobile Station MS for distribution of MBS keying data for an MBS Service Flow, checking in the Access Service Network ASN of said system if access to said MBS Service is authorized for said MS, and, if access to said MBS Service is authorized for said MS, authorizing said distribution of MBS keying data to said MS.

2. A method according to claim 1, wherein said MBS keying data include an MBS Group Traffic Encryption Key MGTEK.

3. A method according to claim 2, comprising a step of:
- deriving an MBS Traffic Encryption Key MTEK from said MGTEK.

4. A method according to claim 2, comprising a step of:
- deriving an MBS Traffic Encryption Key MTEK from said MGTEK and from a permanent value of a MBS Authorization Key MAK.

5. A method according to any of claims 1 to 4, comprising the steps of:
- upon reception from a Mobile Station MS of a request (Key Request) for distribution of MBS keying data for an MBS Service Flow, an ASN entity corresponding to a Base Station BS sending to an ASN entity corresponding to an Access Service Network Gateway ASN GW a request (MBS Access Request) for checking if access to said MBS Service is authorized for said MS,
- upon reception of said request (MBS Access Request), ASN GW checking if access to said MBS Service is authorized for said MS, and returning a reply (MBS Access Grant) to the BS authorizing said BS to distribute said MBS keying data to said MS if access to said MBS Service is authorized for said MS,
- upon reception of said reply (MBS Access Grant), BS distributing MBS keying data to said MS.

6. A method according to claim 5, wherein said steps are repeated upon expiration of a key lifetime.

7. A method according to any of claims 1 to 6, comprising the steps of:
- an AAA Server providing MBS subscription data to an ASN entity upon initial network entry by a MS,
- said ASN entity using said MBS subscription data for checking if access to an MBS Service is authorized for the MS.

8. A method according to any of claims 1 to 7, comprising the steps of:
- generating said MBS keying data in an MBS Server,
- distributing to ASN said MBS keying data generated in said MBS Server.

9. A method according to claims 3 and 8, wherein said generated MBS keying data include said permanent value of a MBS Authorization Key MAK.

10. A method according to claim 8 or 9, comprising the steps of:
- an ASN entity corresponding to an Access Service Network Gateway ASN GW sending to an MBS Server a request (MGTEK Request) for MBS keying data for an MBS Service Flow,
- upon reception of said request (MGTEK Request) from ASN GW, MBS Server returning to ASN GW a reply (MGTEK Response) including MBS keying data for said MBS Service Flow,
- upon reception of said reply (MGTEK Response), ASN GW providing said MBS keying data to at least one ASN entity corresponding to a BS involved in multicast or broadcast of said MBS Service Flow.

11. A method according to claim 10, wherein said steps are repeated upon expiration of a key lifetime.

12. An Access Service Network ASN entity for a wireless access system supporting Multicast Broadcast Services MBS, said ASN entity comprising:
- means for, upon request by a Mobile Station MS for distribution of MBS keying data for an MBS Service Flow, checking if access to said MBS Service is authorized for said MS, and, if access to said MBS Service is authorized for said MS, authorizing said distribution of MBS keying data to said MS.

13. An Access Service Network ASN entity according to claim 12, comprising:
- means for getting from an AAA Server MBS subscription data upon initial network entry by a MS,
- means for using said MBS subscription data for checking if access to an MBS Service is authorized for the MS.

14. An Access Service Network ASN entity for a wireless access system supporting Multicast Broadcast Services MBS, said ASN entity comprising:
- means for distributing MBS keying data for an MBS Service Flow to a MS requesting said distribution of MBS keying data, if said distribution is authorized for said MS.

15. An Access Service Network ASN entity according to claim 14, comprising:
- means for receiving said MBS keying data to be distributed to said MS, distributed by another ASN entity.

16. An Access Service Network ASN entity for a wireless access system supporting Multicast Broadcast Services MBS, said ASN entity comprising:
- means for requesting distribution of MBS keying data for an MBS Service Flow, from an MBS Server.

17. An Access Service Network ASN entity according to claim 16, comprising:
- means for distributing to another ASN entity said MBS keying data distributed by said MBS Server to said ASN entity.

18. An ASN entity according to any of claims 12 to 17, wherein said MBS keying data include an MBS Group Traffic Encryption Key MGTEK.

19. An ASN entity according to claim 18, comprising:
- means for deriving an MBS Traffic Encryption Key MGTEK from said MGTEK.

20. An ASN entity according to claim 19, comprising:
- means for deriving an MBS Traffic Encryption Key MGTEK from said MGTEK and from a permanent value of a MBS Authorization Key MAK.

21. A MBS Server for a wireless access system supporting Multicast Broadcast Services MBS, comprising:
- means for generating MBS keying data to be distributed to Mobile Stations MS for an MBS Service Flow,
- means for distributing said generated MBS keying data to the Access Service Network ASN of said system.

22. A MBS Server according to claim 21, wherein said generated MBS keying data include an MBS Group Traffic Encryption Key MGTEK.

23. A MBS Server according to claim 21 or 22, wherein said generated MBS keying data include a permanent value of a MBS Authorization Key MAK.

24. An ASN entity according to claim 14, corresponding to a Base Station, comprising:
- means for, upon reception from a Mobile Station MS of a request (Key Request) for distribution of MBS keying data for an MBS Service Flow, sending to an Access Service Network Gateway ASN GW a request( MBS Access Request) for checking if access to said MBS Service is authorized for said MS,
- means for, upon reception of a reply (MBS Access Grant) returned by ASN GW if access to said MBS Service is authorized for said MS, distributing said MBS keying data to said MS.

25. An ASN entity corresponding to a Base Station according to claim 24, wherein said steps are repeated upon expiration of a key lifetime.

26. An ASN entity according to claim 15, corresponding to a Base Station, comprising:
- means for receiving MBS keying data to be distributed by said Base Station, distributed by an ASN entity corresponding to an ASN GW.

27. An ASN entity corresponding to a Base Station according to any of claims 24 to 26, wherein said MBS keying data include an MBS Group Traffic Encryption Key MGTEK.

28. An ASN entity corresponding to a Base Station according to claim 27, comprising:
- means for deriving a MBS Traffic Encryption Key MTEK from said distributed MGTEK and from a permanent value of a MAK.

29. An ASN entity corresponding to a Base Station according to claim 28, wherein said MBS keying data include said permanent value of a MBS Authorization Key MAK.

30. An ASN entity according to claim 12, corresponding to an Access Service Network Gateway ASN GW, comprising:
- means for, upon reception from a BS of a request (MBS Access Request) for checking if access to said MBS Service is authorized for said MS, ASN GW checking if access to said MBS Service is authorized for said MS, and returning a reply (MBS Access Grant) to the BS authorizing said BS to distribute said MBS keying data to said MS if access to said MBS Service is authorized for said MS.

31. An ASN entity according to claim 17, corresponding to an Access Service Network Gateway ASN GW, comprising:
- means for distributing MBS keying data to at least one ASN entity corresponding to a BS involved in multicast or broadcast of said MBS Service Flow.

32. An ASN entity according to claim 13, corresponding to an Access Service Network Gateway ASN GW.

33. An Access Service Network Gateway ASN GW according to any of claims 30 to 32, wherein said MBS keying data include an MBS Group Traffic Encryption Key MGTEK.

34. An Access Service Network Gateway ASN GW according to claim 33, wherein said MBS keying data include a permanent value of a MBS Authorization Key MAK.

35. An ASN entity according to claim 16, corresponding to an Access Service Network Gateway ASN GW, comprising:
- means for sending to an MBS Server a request (MGTEK Request) for MBS keying data for an MBS Service Flow,
- means for, upon reception of a reply (MGTEK Response) from said MBS Server including MBS keying data, distributing MBS keying data to at least one ASN entity corresponding to a BS involved in multicast or broadcast of said MBS Service Flow.

36. An MBS Server according to claim 21, comprising :
- means for receiving from an ASN GW a request (MGTEK Request) for MBS keying data for an MBS Service Flow,
- means for, upon reception of said request from ASN GW, distributing said MBS keying data to said ASN GW.

37. A Mobile Station MS for a wireless access system supporting Multicast Broadcast Services MBS, comprising:
- means for storing a permanent value of a MBS Authorization Key MAK.

38. A Mobile Station according to claim 37, comprising:
- means for deriving a MBS Traffic Encryption Key MTEK from a value of a MBS Group Traffic Encryption Key MGTEK distributed to said MS by the ASN of said system, and from said permanent value of MAK.
